(19) Europäisches Patentamt

European Patent Office

Office européen des brevets

(11) **EP 1 269 054 B1**

(12) **EUROPÄISCHE PATENTSCHRIFT**

(45) Veröffentlichungstag und Bekanntmachung des Hinweises auf die Patenterteilung:
**11.08.2004   Patentblatt 2004/33**

(21) Anmeldenummer: 01933579.3

(22) Anmeldetag: **02.04.2001**

(51) Int Cl.⁷: **F16K 37/00**

(86) Internationale Anmeldenummer:
**PCT/DE2001/001283**

(87) Internationale Veröffentlichungsnummer:
**WO 2001/075344 (11.10.2001 Gazette 2001/41)**

(54) **STELLUNGSREGLER, INSBESONDERE FÜR EIN DURCH EINEN ANTRIEB BETÄTIGBARES VENTIL**

POSITIONER, ESPECIALLY FOR A VALVE THAT CAN BE ACTUATED BY A DRIVE

POSITIONNEUR, NOTAMMENT DESTINE A UNE SOUPAPE POUVANT ETRE ACTIONNEE PAR UN SYSTEME D'ENTRAINEMENT

(84) Benannte Vertragsstaaten:
**DE FR GB NL**

(30) Priorität: **04.04.2000  DE 10016636**

(43) Veröffentlichungstag der Anmeldung:
**02.01.2003   Patentblatt 2003/01**

(73) Patentinhaber: **SIEMENS AKTIENGESELLSCHAFT**
**80333 München (DE)**

(72) Erfinder:
• **CLEMENS, Wolfgang**
  **90617 Puschendorf (DE)**

• **FIEBELKORN, Klaus**
  **76872 Minfeld (DE)**
• **KLEBERT, Gerhard**
  **76332 Bad Herrenalb (DE)**
• **LUDWIG, Klaus**
  **91058 Erlangen (DE)**
• **MEINHOF, André-Heinrich**
  **76287 Rheinstetten (DE)**
• **SCHMÄDICKE, Holger**
  **76829 Landau (DE)**

(56) Entgegenhaltungen:
EP-A- 0 637 713          WO-A-00/28282
WO-A-01/14750          DE-A- 19 612 422
JP-A- 8 285 511

## Beschreibung

Die Erfindung betrifft einen Stellungsregler, insbesondere für ein durch einen Antrieb betätigbares Ventil, nach dem Oberbegriff des Anspruchs 1.

Aus der EP 0 637 713 A1 ist bereits ein derartiger Stellungsregler für ein durch einen Antrieb betätigbares Ventil bekannt. Das Ventil ist in einer Rohrleitung eingebaut und steuert durch einen entsprechenden Hub eines mit einem Ventilsitz zusammenwirkenden Schließkörpers den Durchtritt eines Mediums. Ein pneumatischer Antrieb ist über eine Schubstange mit dem Schließkörper verbunden. An die Schubstange greift ein Hebel an, der auf einen Potentiometer als Positionsgeber des Stellungsreglers einwirkt. Das Potentiometer erfasst die Ist-Position des Stellglieds. Diese wird in einer Reglereinheit des Stellungsreglers mit einer vorgebbaren Soll-Position verglichen. In Abhängigkeit der ermittelten Abweichung erzeugt die Reglereinheit ein Stellsignal zur Steuerung des pneumatischen Antriebs. Der Sollwert wird dem Stellungsregler durch ein normiertes Signal, beispielsweise eine 4 bis 20 mA-Schnittstelle oder ein digitales Feldbustelegramm, vorgegeben. Die Aufgabe des Stellungsreglers besteht also darin, den vorgegebenen Sollwert der Position des Stellglieds in ein pneumatisches Drucksignal umzusetzen, das dem pneumatischen Antrieb zugeführt wird und in einer entsprechenden Position der Schubstange resultiert.

Daneben sind Klappenventile bekannt, in welchen der Öffnungswinkel einer Drehklappe mit Hilfe eines Drehpotentiometers erfasst wird. In diesem Fall erzeugt ein Stellungsregler ein Stellsignal für einen Schwenkantrieb, der die Drehklappe betätigt.

Wegen ihrer einfachen und preiswerten Technik werden zur Positionserfassung häufig Schleifpotentiometer verwendet, deren Vorteil eine relativ einfache Erzeugung eines auswertbaren elektrischen Stellungssignals bei einem geringen Stromverbrauch ist. Beispielsweise ein mit 3 V betriebenes 10 kΩ Potentiometer verbraucht maximal nur 300 µA. Die Hub- oder Drehbewegung des Stellglieds wird über entsprechende Anbauteile, beispielsweise über einen Drehhebel mit einem umschaltbaren Zahnradgetriebe, auf die Drehachse des Potentiometers gegeben und die vom Schleifer abgegriffene Teilspannung auf den Analogeingang einer analogen oder digitalen Reglereinheit übertragen. Der Erfassungsbereich des Drehwinkels für Schwenkantriebe beträgt üblicherweise maximal 120°. Für Schubantriebe beträgt der Erfassungsbereich maximal 15 mm. Die lineare Bewegung kann mittels einer Umsetzungsmechanik ebenfalls in einem Drehwinkel von maximal 120° umgewandelt werden.

In vielen Bereichen der Prozess- und Energietechnik hängt der störungsfreie Betrieb einer Anlage von der einwandfreien Funktion der eingesetzten Regelventile ab. Stillstände von Anlagen oder Anlageteilen, verursacht durch ausgefallene Komponenten, vermindern die Produktionskapazität und die mögliche Auslastung der Anlage erheblich. Eine Verminderung von Stillstandszeiten und eine erhöhte Anlagenzuverlässigkeit sind somit wesentliche Ziele für den wirtschaftlichen Betrieb einer Anlage.

Häufig verwendete elektromechanische Schleifpotentiometer zur Dreh- oder Linearpositionserfassung besitzen aufgrund ihres Aufbaus Nachteile in der Langzeitstabilität wegen Abnutzung und Oxidation der Kontaktbahnen sowie in der Schwingungsfestigkeit. Nach längerem quasi-statischem Betrieb neigen ihre Schleifer zum Kleben. Durch mechanischen Verschleiß werden die Schleifer und Widerstandsschichten mit der Zeit abgenutzt oder durch Alterung und Oxidation in ihrer Beschaffenheit verändert. Bei elektromechanischen Schleifpotentiometern wird die Dreh- oder Linearbewegung mittels einer durchgehenden Achse übertragen. Eine geeignete Abkapselung vor Umwelteinflüssen ist daher sehr aufwendig und selbst von Alterung und Verschleiß betroffen.

Aus der EP 0 680 614 B1 ist eine Vorrichtung zum Erfassen einer Winkelposition eines Objektes bekannt. Die in dieser Patentschrift beschriebenen Sensoren nach dem giant magnetoresistiven (GMR-) Effekt bestehen aus abwechselnd hartmagnetischen und weichmagnetischen Metallschichten. Diese sind jeweils nur wenige Atomlagen dick und werden auf einem Siliziumträgermaterial aufgesputtert. Diese Sensoren besitzen eine große Abhängigkeit ihres Widerstands von der Richtung eines einwirkenden Magnetfeldes. Mit einem GMR-Sensor ist somit eine Winkelpositionsänderung eines Magneten gut erfassbar.

Der Erfindung liegt die Aufgabe zugrunde, einen Stellungsregler, insbesondere für ein durch einen Antrieb betätigbares Ventil, zu schaffen, der sich bei geringem Herstellungsaufwand durch eine verbesserte Unempfindlichkeit gegen Störungen auszeichnet.

Zur Lösung dieser Aufgabe weist der neue Stellungsregler der eingangs genannten Art die im kennzeichnenden Teil des Anspruchs 1 angegebenen Merkmale auf. In den Unteransprüchen sind vorteilhafte Weiterbildungen des Stellungsreglers beschrieben.

Durch die Erfindung werden die Nachteile herkömmlicher Potentiometer vermieden, da ein kontaktloses Potentiometer, das im Wesentlichen aus einem Magneten und einem magnetoresistiven Sensor besteht, verwendet wird. Der neue Positionsgeber liefert auch im statischen Fall die genaue Ist-Position des Stellglieds. Eine ohnehin geringe Unlinearität des Ausgangssignals ist leicht kompensierbar. Zwischen Magnet und magnetoresistivem Sensor kann in einfacher Weise eine Trennwand zur Kapselung und damit zum Schutz vor Umwelteinflüssen angebracht werden. Der Positionsgeber ist somit äußerst unempfindlich gegen Verschmutzung und rauhe Umgebung. Der Magnet kann außerhalb des Sensorgehäuses an einem Schuboder Schwenkantrieb leicht so befestigt werden, dass seine magneti-

2

schen Feldlinien durch die Gehäusewand auf den magnetoresistiven Sensor einwirken. In das Sensorgehäuse ist eine Auswerteschaltung integrierbar, die anhand der Widerstandsänderung des magnetoresistiven Sensors eine dem Drehwinkel bzw. dem linearen Weg des Magneten proportionale Spannung erzeugt und somit einer Reglereinheit ein der Ist-Position entsprechendes, gegenüber Störeinflüssen unempfindliches Signal liefert.

In einfacher Weise ist ein minimaler Abstand zwischen Magnet und Sensor einzuhalten, um insbesondere bei einem GMR-Sensor eine Beschädigung der hartmagnetischen Schichten zu vermeiden, da bei diesem Sensortyp die Stärke des Magnetfelds 15 kA/m nicht übersteigen darf. Durch das kontaktlose Prinzip des neuen Positionsgebers entfällt das Problem kratzender oder klebender Schleifpotentiometer. Bei Anwendungen, in denen das Potentiometer einem permanenten Rütteln ausgesetzt ist, bietet das kontaktlose Prinzip ebenso Vorteile wie im quasi-statischen Fall, wenn die Potentiometerstellung über lange Zeit nicht verändert wird und sich der Schleifer eines Schleifpotentiometers durch Regelunruhe in der Strecke in die Widerstandsschicht eingraben und evtl. dort hängen bleiben würde. Bildet der Magnet das mit dem Stellglied gekoppelte Bewegungsteil des Positionsgebers, so koppelt er ohne mechanische Durchführung die Stellbewegung durch sein Magnetfeld in den magnetoresistiven Sensor ein. Durch entsprechende Anbauteile kann in einfacher Weise eine exakte Dreh- oder Linearbewegungsführung des Bewegungsteils sichergestellt werden.

Der Magnet ist als Permanentmagnet ausgebildet. Dies ermöglicht einen besonders einfachen Aufbau, da der Magnet keine Stromzuführung benötigt und den Strombedarf des Positionsgebers nicht erhöht.

Der Einsatz eines sogenannten giant magnetoresistiven (GMR-) Sensors hat den Vorteil, dass die Widerstandsänderung in einem weiten Bereich feldstärkeunabhängig ist und lediglich empfindlich auf die Richtung des Magnetfeldes reagiert. Die Richtungsabhängigkeit des Widerstands ähnelt einer Cosinusfunktion und ist somit in einem großen Bereich nahezu linear.

In vorteilhafter Weise ist derselbe Sensoraufbau sowohl für einen Anbau an Drehantrieben als auch für einen Anbau an Schubantrieben geeignet, ohne dass konstruktive Änderungen vorgenommen werden müssen. Dazu wird der GMR-Sensor in einem Gehäuse derart angeordnet, dass derselbe Sensor zur Detektion einer relativen Drehbewegung zumindest näherungsweise auf der Drehachse eines für diesen Fall vorgesehenen Magneten und zur Detektion einer relativen Verschiebung gemeinsam mit einem für diesen Fall vorgesehenen Magneten in einer im Wesentlichen senkrecht zur oben erwähnten Drehachse verlaufenden Ebene positionierbar ist. Dabei beträgt der Abstand zwischen dem Sensor und der zum Magneten weisenden Gehäusewand vorzugsweise etwa 5 mm. Damit ist sichergestellt, dass der erforderliche Mindestabstand zwischen Magnet und Sensor eingehalten wird. Durch die Verwendbarkeit bei Dreh- und Schubantrieben werden Logistik- und Lagerhaltungskosten reduziert, da nur ein GMR-Sensortyp bevorratet werden muss.

Eine verbesserte Messgenauigkeit bei Temperaturschwankungen wird erreicht, wenn im Gehäuse des GMR-Sensors eine Temperaturkompensationsschaltung angeordnet ist. Für eine besonders gute Temperaturkompensation kann der Brückenwiderstand des GMR-Sensors gleichzeitig als Messwiderstand der Temperaturkompensationsschaltung genutzt werden. Dadurch entfallen Probleme einer thermischen Kopplung zwischen Messwiderstand und GMR-Sensor völlig.

In vorteilhafter Weise wird der GMR-Sensor auf der einen Seite und die Temperaturkompensationsschaltung auf der anderen Seite derselben Leiterplatte angeordnet. Die Bauelemente der Temperaturkompensationsschaltung, die üblicherweise größere Gehäuse besitzen als das Bauelementegehäuse des GMR-Sensors, müssen somit nicht zwischen GMR-Sensor und der zum Magneten weisenden Außenseite des Positionsgebergehäuses angeordnet werden und beeinflussen deren Abstand nicht. Damit ist ein geringerer Abstand zwischen der Oberkante des Bauelementegehäuses des GMR-Sensors und der Gehäuseaußenseite möglich.

Bei geringem Aufwand kann eine exakte Positionierung von Magnet zum GMR-Sensor erreicht werden, wenn am Gehäuse des GMR-Sensors eine Zentrierhilfe für die Einstellung der relativen Lage des Magneten zum Sensor bei der Montage vorgesehen ist. Diese Positionierhilfe kann als ein auf den Magneten aufsetzbares und nach der Montage wieder abnehmbares Formteil ausgebildet werden, das formschlüssig in einer Ausnehmung am Gehäuse des GMR-Sensors bei der Montage eingesetzt wird. Nach der Befestigung von Magnet und GMR-Sensor wird das Formteil wieder entnommen.

Eine mechanisch formschlüssige Gestaltung von Bewegungsteil und Sensorgehäuse gewährleistet die räumlich lagerichtige Zuordnung von Magnet und Sensor. Die Verbindungen der beiden Teile zu einem kompletten Positionsgeber kann dabei kraftschlüssig erfolgen. Der Positionsgeber kann alternativ auch als mechanisch einteiliger, kompletter Positionsgeberblock aufgebaut sein, der Bewegungsteil mit Magnet, GMR-Sensor und Auswerteelektronik enthält und einen definierten Abstand zwischen dem Magneten und dem GMR-Sensor gewährleistet. Die prinzipiell sowohl mechanisch, wie auch galvanisch vom Bewegungsteil völlig trennbare, aktive Auswertungselektronik ermöglicht eine sowohl gegen elektrische wie auch magnetische Störeinflüsse einfach abschirmbare, störsichere und robuste Positionsgeberelektronik in Kleinbauform. Der Magnet selbst kann dabei ohne eine mechanische Durchführung durch eine Trennwand zum Gehäuse des GMR-Sensors mit diesem in einer gemeinsamen Abschirmkammer liegen, die vor elektrostatischen und elektromagnetischen Störungen schützt. Zum Einsatz in extrem gestörten Bereichen kann eine entsprechende äußere Abschirmung, die auch den Magneten einschließt, als ein bei Bedarf ergänzbares Bauteil ausgeführt werden.

Damit die Reglereinheit nicht der evtl. hohen Temperatur, die beim Positionsgeber am Stellglied herrscht, ausgesetzt ist, kann sie in vorteilhafter Weise in einem zweiten, vom Gehäuse des GMR-Sensors getrennten Gehäuse angeordnet werden. In diesem Fall werden der Positionsgeber und die Reglereinheit durch ein Medium zur Übertragung der Ist-Position des Stellglieds, beispielsweise durch ein elektrisches Kabel, miteinander verbunden. Die Erfassung der Linear- oder Drehbewegung erfolgt dabei direkt am Antrieb oder Stellglied durch den Positionsgeber in einem Sensorgehäuse, das durch einen entsprechenden Anbausatz befestigt wird. Das Sensorgehäuse kann auch durch das Gehäuse eines Stellungsreglers gebildet werden, in welchem für den getrennten Aufbau lediglich die Schaltungsteile des Positionsgebers untergebracht sind. Die Reglereinheit des Stellungsreglers kann in einiger Entfernung beispielsweise an einem Montagerohr oder ähnlichen Montagehilfe angebaut werden und ist mit dem Positionsgeber über eine elektrische Kabelverbindung und mit dem pneumatischen Antrieb über eine oder zwei pneumatische Leitungen verbunden. Eine Unterbringung von Positionsgeber und Reglereinheit in getrennten Gehäusen ist dann sinnvoll, wenn die Umgebungsbedingungen am Stellglied die für die Reglereinheit spezifizierten Werte überschreiten. Das kann beispielsweise der Fall sein bei einer hohen Temperatur am Ventil oder Antrieb aufgrund eines heißen Fließmediums, bei starken Schwingungen oder Vibrationen am Ventil oder Antrieb oder wenn am Ventil oder Antrieb wenig Platz für den Anbau des vollständigen Stellungsreglers vorhanden ist.

Weitere Vorteile des neuen Stellungsreglers sind seine Einsetzbarkeit in explosionsgefährdeten Bereichen durch seinen niedrigen Leistungsbedarf und einfach integrierbare Schutzschaltungen, weite Versorgungsspannungstoleranzen, eine Minimierung von externen Störeinflüssen durch integrierte Schirme und EMI-Filter, eine Minimierung der Temperatureinflüsse bei kleinem Speisestrom, eine Minimierung und stabile Reproduzierbarkeit der Hysterese als Funktion des Drehwinkels zwischen Magnet und GMR-Sensor sowie der Feldstärke.

Die kleinen Schwankungen der Hysterese und der geringen Unlinearität, die sich aus der Exemplarstreuung der GMR-Sensoren ergeben, sind bei der Anwendung als Positionsgeber in einem Stellungsregler irrelevant. Wenn die Ist-Position als Information durch den Stellungsregler an weitere Komponenten einer Anlage ausgegeben werden soll, kann das Ausgangssignal entsprechend der bekannten Linearitäts- und Hysteresekennlinie des einzelnen GMR-Sensors einfach korrigiert und aktiv gefiltert werden. Dazu können bei Bedarf in einem Mikrocontroller des Stellungsreglers die exemplarspezifischen Korrekturdaten des GMR-Sensors gespeichert werden. Für eine vereinfachte Korrektur der Linearitäts- und Hysteresefehler genügt die exemplarspezifische Ermittlung und Speicherung von fünf charakteristischen Stützwerten, die unter Standardbedingungen aufgenommen werden. Die Stützwerte können beispielsweise an den Stellen der maximalen Steigungsänderung der Kennlinien liegen. Für eine exaktere Korrektur können auch die gesamten Kennlinien mit der gewünschten Auflösung in einem seriell auslesbaren, mit den GMR-Sensor ausgelieferten und diesem durch eine Identifikationskennung zugeordneten Speichermedium abgelegt werden. Der Inhalt des Speichermediums kann beispielsweise bei der Installation des GMR-Sensors in den Mikrocontroller geladen werden.

Anhand der Zeichnungen, in denen ein Ausführungsbeispiel der Erfindung dargestellt ist, werden im folgenden die Erfindung sowie Ausgestaltungen und Vorteile näher erläutert.

Es zeigen:

Figur 1      ein Regelventil,
Figur 2      ein Blockschaltbild eines Positionsgebers,
Figur 3      eine Schaltung zur Temperaturkompensation,
Figur 4      eine Schaltung zur Verstärker- und Offseteinstellung,
Figur 5      eine Flachbaugruppe mit den Schaltungen nach den Figuren 3 und 4,
Figur 6      einen Metallschirm für die Flachbaugruppe nach Figur 5,
Figur 7      eine Draufsicht auf einen geöffneten Metallschirm,
Figur 8      eine Seitenansicht eines geöffneten Metallschirms,
Figur 9      ein Gehäuse für einen GMR-Sensor,
Figur 10     einen Verschlussdeckel für das Gehäuse nach Figur 9,
Figur 11     eine Ansicht eines Winkelpositionsgebers von unten,
Figur 12     eine Seitenansicht des Winkelpositionsgebers nach Figur 11,
Figur 13     eine Ansicht eines Linearpositionsgebers von unten und
Figur 14     eine Seitenansicht des Linearpositionsgebers nach Figur 13.

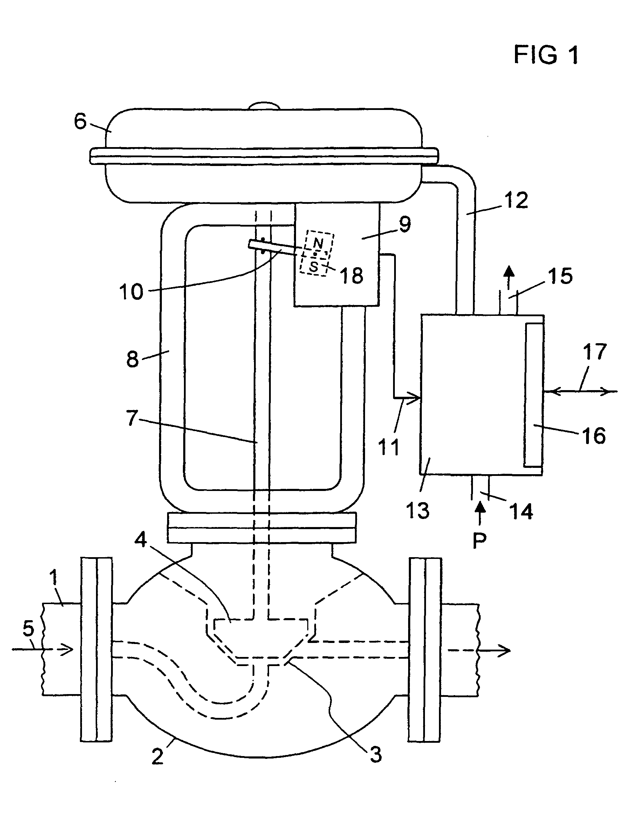

In eine Rohrleitung 1 einer nicht weiter dargestellten prozesstechnischen Anlage ist gemäß Figur 1 ein Ventil 2 eingebaut, das durch einen entsprechenden Hub eines mit einem Ventilsitz 3 zusammenwirkenden Schließkörpers 4 den Durchfluss eines Mediums 5 steuert. Der Hub wird durch einen pneumatischen Antrieb 6 erzeugt und mittels einer Ventilstange 7 auf den Schließkörper 4 übertragen. Der Antrieb 6 ist über ein Joch 8 mit dem Gehäuse des Ventils 2 verbunden. An dem Joch 8 ist ein Positionsgeber 9 angebracht, der eingangsseitig über ein an der Ventilstange 7 geführtes Verbindungsstück 10 den Hub erfasst und ein dem Hub entsprechendes analoges Ausgangssignal 11 erzeugt. Im pneumatischen Antrieb 6 befindet sich eine im Wesentlichen horizontal verlaufende Membran, welche eine obere von einer unteren Kammer trennt. Über eine Rohrleitung 12 ist die untere Kammer mit einer Reglereinheit 13 verbunden, die in einem vom Gehäuse des Positionsgebers 9 getrennten Gehäuse untergebracht ist. In der oberen Kammer ist eine Feder angeordnet, welche gegen den Druck der unteren Kammer wirkt und im drucklosen Fall das Ventil 2 verschließt. Durch Ventile in der Reglereinheit 13 gesteuert kann über eine Leitung 14 zugeführte Zuluft mit einem Druck P über die Leitung 12 in die untere Kammer eingeleitet oder Abluft über eine Leitung 15 in die Umgebung gelassen werden. Die Reglereinheit 13 vergleicht die mit dem Signal 11 erhaltene Ist-Position der Ventilstange 7, die regelungstechnisch als Stellglied bezeichnet werden kann, mit einem über eine Datenschnittstelle 16 von einem Feldbus 17 zugeführten Sollwert und regelt durch entsprechende Einstellung der Luftströmung in der Rohrleitung 12 eine evtl. vorhandene Regeldifferenz aus. Das Verbindungsstück 10 ist durch einen Hebelarm realisiert, der zwischen zwei an der Ventilstange 7 angebrachten Stiften geführt ist und somit den Hubbewegungen der Ventilstange 7 folgt. Ein an diesem Hebel befestigter Magnet 18 ist im Gehäuse des Positionsgebers 9, das auch einen GMR-Sensor enthält, drehbar gelagert und wird durch den Hebel in eine dem Hub der Ventilstange 7 entsprechende Drehbewegung versetzt. Während der Positionsgeber 9 am Joch 8 befestigt und somit einer evtl. hohen Umgebungstemperatur ausgesetzt ist, kann die Reglereinheit 13 entfernt hiervon in weniger rauher Umgebung beispielsweise an einem in der Figur 1 nicht dargestellten Montagerohr befestigt werden. Dadurch wird der Einsatzbereich des Stellungsreglers, der üblicherweise empfindliche Ventile zur pneumatischen Steuerung enthält, erweitert.

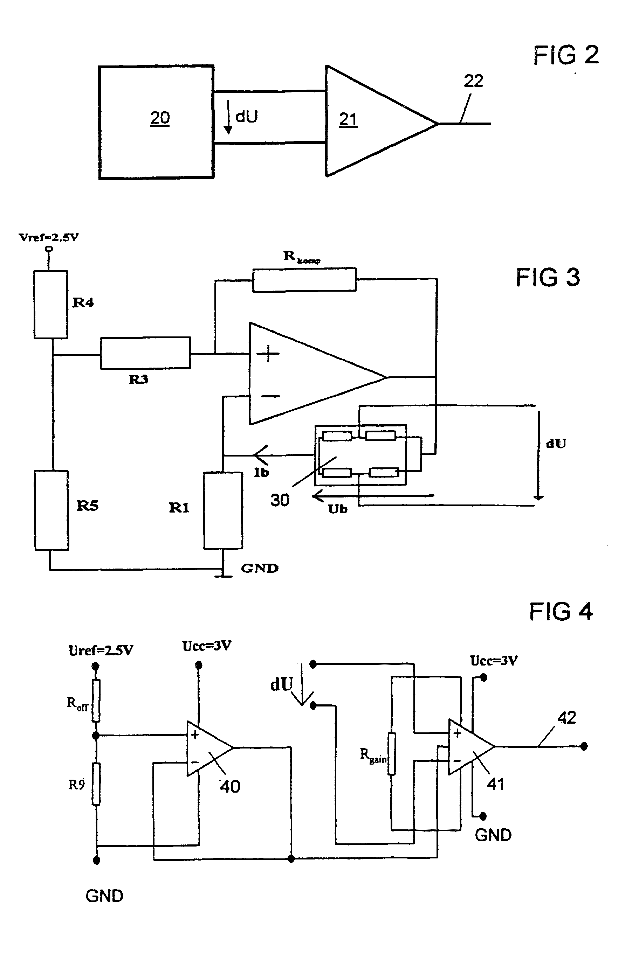

Ein Prinzipschaltbild einer in den Positionsgeber 9 (Figur 1) integrierten Auswerteschaltung mit GMR-Sensor ist in Figur 2 dargestellt. Prinzipiell besteht die Auswerteschaltung für die von der Richtung des Magnetfelds abhängige Widerstandsänderung des GMR-Sensors aus einer Schaltung 20 zur Versorgung der Messbrücke und zur Temperaturkompensation, welche unter anderem die Messbrücke selbst enthält, sowie aus einer Schaltung 21 zur Signalkonditionierung mit Offsetbildung und Verstärkung eines Brückenausgangssignals dU, das von der Schaltung 20 geliefert wird. Die Schaltung 21 erzeugt ein Ausgangssignal 22, beispielsweise mit einem Wertebereich von 0,1 bis 2,5 V, welches die Ist-Position des Stellglieds darstellt. Das Ausgangssignal 22 entspricht dem Signal 11 in Figur 1. In Figur 2 nicht dargestellt sind weitere Schaltungsteile, z.B. EMI-Filter und redundante elektronische Stromund Spannungsbegrenzungen, die in den Anschlusszweigen der Schaltung liegen und der Störsicherheit dienen sowie bezüglich des Explosionsschutzes unzulässige Betriebszustände vermeiden. Die gesamte Auswerteschaltung zeichnet sich durch einen besonders geringen Strombedarf von weniger als 300 µA aus.

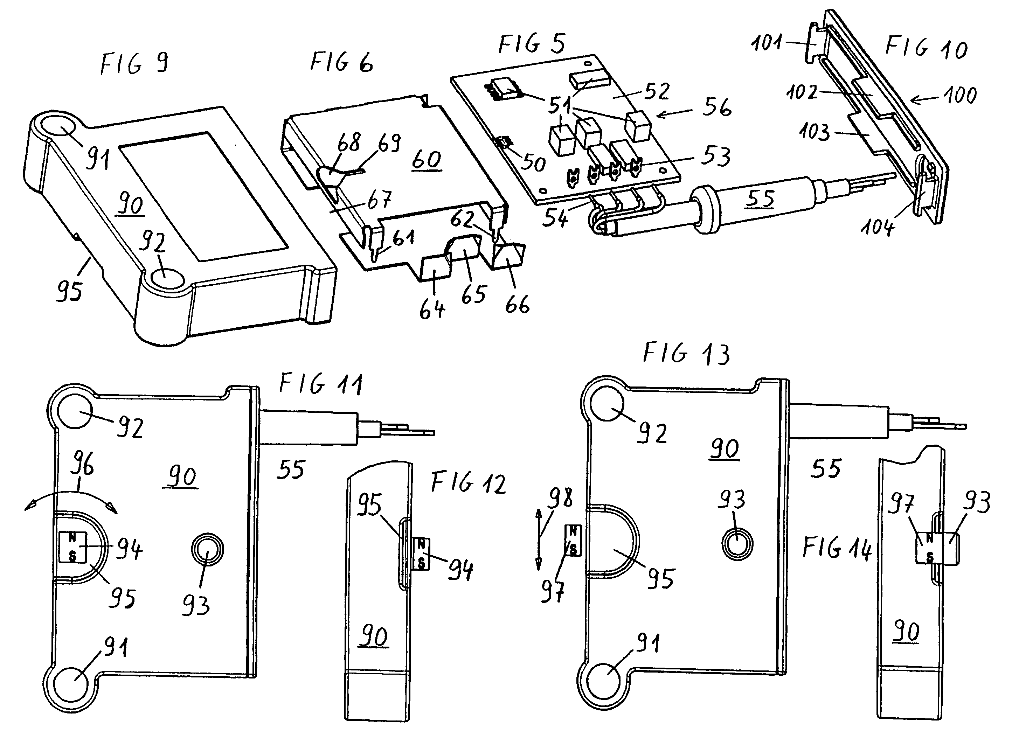

Figur 3 ist eine Detaildarstellung der Schaltung 20 (Figur 2), die zur Temperaturkompensation und zur Versorgung eines GMR-Sensors 30 dient. Der GMR-Effekt ist temperaturabhängig. Die Brückenausgangsspannung dU kann durch die folgende Formel angenähert werden:

$$dU(\alpha, T) = \frac{1}{2} \cdot \frac{\Delta R}{R_o}(T_0) \cdot \left[1 + Tk_{\Delta R/Ro\_lin} \cdot (T - T_0) + Tk_{\Delta R/Ro\_Q} \cdot (T - T_o)^2\right] \cdot U_b(T) \cdot \cos(\alpha) + U_{off}$$

$$dU(T) \sim U_b \cdot \left[f(T)\right]$$

mit

$\alpha$ - der zwischen der Richtung des magnetischen Feldes und dem GMR-Sensor eingeschlossene Winkel,

T - Temperatur des GMR-Sensors 30,

$T_0$ - 20 °C,

$R_0$ - Widerstand bei 20 °C,

$Tk_{\Delta R/Ro\_lin}$ und $Tk_{\Delta R/Ro\_Q}$ - Kompensationsparameter und

$U_{off}$ - eine Offsetspannung.

Um einem Abfallen der Brückenausgangsspannung dU des GMR-Sensors 30 mit der Temperatur entgegenzuwirken, wird eine Versorgungsspannung Ub der Brücke entsprechend erhöht. Diese Funktion wird mit der in Figur 3 dargestellten Schaltung realisiert. Ohne einen Widerstand $R_{komp}$ würde die Schaltung eine Konstantstromquelle für einen Strom Ib darstellen, dessen Wert durch einen Widerstand R1 und die Spannung an einem Spannungsteiler eingestellt wird, der mit Widerständen R4 und R5 sowie R3 gebildet ist. Versorgt wird der Spannungsteiler mit einer Spannung $V_{ref}$ = 2,5 V. Da der Widerstand der GMR-Sensorbrücke $R_{sen}$ mit der Temperatur steigt, die mit der Richtung des Magnetfeldes sich ändernde Spannung dU am Brückenausgang aber um etwa das zweifache fällt, reicht die Spannungserhöhung durch die Konstantstromquelle nicht aus, um die Amplitude der Brückenausgangsspannung dU unabhängig von der Temperatur konstant zu halten. Deshalb wird die Spannungserhöhung durch eine positive Rück-

kopplung mit dem Widerstand $R_{komp}$ derart eingestellt, dass durch diese der Rückgang des Sensoreffektes an der Sensorbrücke ausgeglichen wird. Der Brückenwiderstand des GMR-Sensors 30 selbst dient dabei als Temperatursensor. Für eine optimale Temperaturkompensation wird $R_{komp}$ festgelegt zu:

$$R_{komp} = \frac{R_{sen}(T_o) \cdot (R_3 R_4 + R_3 R_5 + R_4 R_5)}{R_1 (R_4 + R_5)} \cdot \frac{1}{\left(\frac{1}{C} - \frac{1}{D}\right)} \cdot$$

$$\cdot \left( \frac{1}{\left[1 - 50 Tk_{\Delta R/Ro\_lin} + 2500 Tk_{\Delta R/Ro\_Q}\right]} - \frac{1}{\left[1 + 60 Tk_{\Delta R/Ro\_lin} + 3600 Tk_{\Delta R/Ro\_Q}\right]} \right)$$

mit

$$C = \left[1 - 50 Tk_{\Delta R/Ro\_lin} + 2500 Tk_{\Delta R/Ro\_Q}\right]\left[1 - 50 Tk_{Rsen\_lin} + 2500 Tk_{Rsen\_Q}\right]$$

und

$$D = \left[1 + 60 Tk_{\Delta R/Ro\_lin} + 3600 Tk_{\Delta R/Ro\_Q}\right]\left[1 + 60 Tk_{Rsen\_lin} + 3600 Tk_{Rsen\_Q}\right]$$

Diese Schaltung zeichnet sich bei geeigneter Wahl der Werte der Widerstände R1, R3, R4 und R5 durch einen besonders niedrigen Stromverbrauch bei guter Genauigkeit der Temperaturkompensation aus.

Das Ausgangssignal dU des GMR-Sensors 30 (Figur 3) wird mit der in Figur 4 gezeigten Schaltung bezüglich seiner Verstärkung und seiner Offseteinstellung angepasst. Ein Operationsverstärker 40, der mit einer Versorgungsspannung Ucc = 3 V betrieben wird, dient gemeinsam mit einem Spannungsteiler mit Widerständen $R_{off}$ und R9, an welchem eine Referenzspannung Uref = 2,5 V angelegt ist, zur Offseteinstellung. Die am Ausgang des Operationsverstärkers 40 erhaltene Ausgangsspannung ist auf einen Differenzverstärker 41 geführt, der zur Einstellung der Verstärkung dient. Dieser Differenzverstärker 41 wird ebenfalls mit einer Versorgungsspannung Ucc = 3 V betrieben. Auf diese Weise wird das differentiell vorliegende Signal dU von etwa 3 mV auf 1,2 V verstärkt und auf ein mittleres Potential von 1,3 V angehoben. Ein Ausgangssignal 42, das dem Signal 11 in Figur 1 entspricht, hat einen Wertebereich von 0,1 bis 2,5 V. Ein Verstärkerwiderstand $R_{gain}$ wird derart dimensioniert, dass der Wertebereich des Ausgangssignals dU des GMR-Sensors 30 (Figur 3) auf den Wertebereich des Ausgangssignals 42 abgebildet wird. Auch diese Schaltung zeichnet sich durch einen besonders geringen Stromverbrauch aus. Dies ist besonders wichtig bei Verwendung des Positionsgebers in Kombination mit einem Feldbus, über welchen die zum Betrieb der Schaltungsteile erforderliche Betriebsenergie gemeinsam mit den Informationssignalen übertragen wird. Auch bei Verwendung einer 4 bis 20 mA-Schnittstelle für den Stellungsregler ist ein geringer Stromverbrauch der Schaltungsteile von besonderer Bedeutung, da der Stellungsregler lediglich mit einem Betriebsstrom von etwa 4 mA auskommen muss.

Figur 5 zeigt eine Möglichkeit zur räumlichen Anordnung eines GMR-Sensors 50 und einer Auswerteschaltung auf einer Leiterplatte 52. Der GMR-Sensor 50 ist auf der abgewandten Unterseite der hier zur besseren Verdeutlichung transparent dargestellten Leiterplatte 52 angebracht, während die Bauelemente 51 der Auswerteschaltung auf der Oberseite bestückt sind. Dadurch wird erreicht, dass die höheren Bauelemente 51 der Auswerteschaltung nicht bei der Festlegung des Abstandes zwischen der Oberkante des GMR-Sensors 50 und der Gehäuseaußenseite berücksichtigt werden müssen. An der Vorderkante der Leiterplatte 52 sind vier Lötfahnen 53 bestückt, in welchen Kabelenden 54 eines Kabels 55 eingelötet werden. Zwei Adern des Kabels dienen zur Ausgabe des Ausgangssignals (11 in Figur 1), die zwei weiteren Adern zur Versorgung der elektronischen Schaltungsteile des Positionsgebers.

Alternativ zu den beschriebenen Ausführungsbeispiel mit einem GMR-Sensor 50 kann der Sensor auch als sogenannter anisotrop magnetoresistiver Sensor ausgebildet sein. Das Schaltungsprinzip der Auswerteschaltung bleibt davon unberührt.

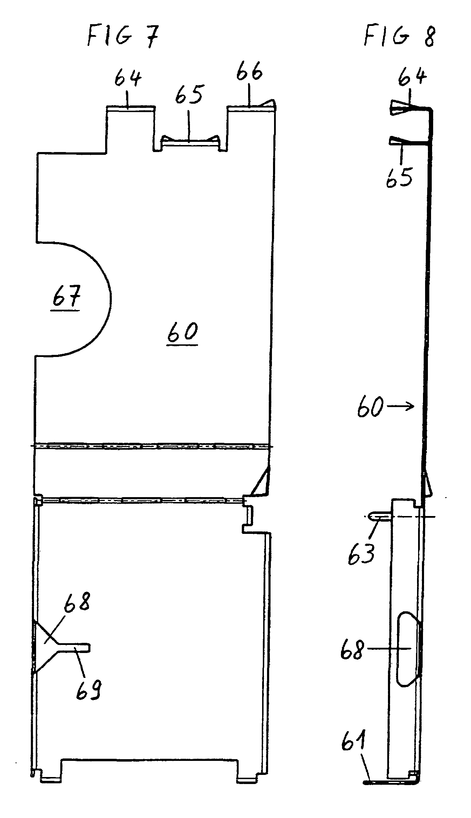

Die so bestückte Flachbaugruppe 56 wird in einen Metallschirm 60 eingesetzt, der in Figur 6 in gefalteten und in den Figuren 7 und 8 in geöffnetem Zustand dargestellt ist.

In den Figuren sind jeweils gleiche Teile mit gleichen Bezugzeichen versehen. Zur lagerichtigen Aufnahme der Flachbaugruppe 56 sind drei Lötstifte 61, 62 und 63 vorgesehen, welche in dazu korrespondierende Bohrungen der Leiterplatte 52 hineinragen und dort zur Montage eingelötet werden. Nach Einlöten der Leiterplatte 52 wird der Metallschirm zusammengefaltet und das Kabel 55 in Klemmlaschen 64, 65 und 66 eingelegt und dort durch Klemmkraft gehalten. In dem Bereich, in welchem der GMR-Sensor 50 zu liegen kommt, ist im Metallschirm 60 eine im Wesentlichen halbkreisförmigem Ausnehmung 67 angebracht, damit ein magnetisches Feld den Metallschirm 60 durchdringen und den GMR-Sensor 50 erreichen kann. Eine Ausnehmung 68 dient zur exakten Positionierung des Metallschirms 60 in einem Gehäuse 90, das in Figur 9 dargestellt ist. Die Ausnehmung 68 wird beim Einfügen in das Gehäuse 90 auf eine Rippe aufgeschoben, welche in Figur 9 durch die Gehäuseoberseite verdeckt wird. Bei erfolgter Zentrierung kommt diese Rippe in einer Nut 69 der Ausnehmung 68 zu liegen. Das Gehäuse 90 des GMR-Sensors 50 besteht beispielsweise aus Kunststoff oder einem nicht ferromagnetischen Material, welches die Flachbaugruppe 56 vor Umwelteinflüssen schützt. Gleichzeitig bietet das Gehäuse 90 Befestigungsmöglichkeiten für den Positionsgeber am Einsatzort. Zur einfachen Befestigung an genormten Anbausätzen sind zwei Aufnahmeöffnungen 91 und 92 für Schrauben sowie ein Positionierstift 93 am Gehäuse 90 angebracht. Der Positionierstift 93 ist in Figur 9 verdeckt und lediglich in den Figuren 11 und 13, welche die Ansicht des Gehäuses von unten wiedergeben, sichtbar. Mit diesen Befestigungsmöglichkeiten ist in jedem Fall eine stabile Zuordnung des Positionsgebers zum Stellglied realisierbar.

Nach Einschieben des mit der Flachbaugruppe 56 bestückten und gefalteten Metallschirms 60 in das Gehäuse 90 wird dieses durch einen in Figur 10 dargestellten Deckel 100 verschlossen, der zu den Gehäuseinnenseiten korrespondierende Führungslaschen 101 bis 104 aufweist.

Der Metallschirm 60 ist zwischen der Flachbaugruppe 56 und dem Gehäuse 90 aus Gründen der elektromagnetischen Verträglichkeit angeordnet, d.h. um die Beeinflussung der Auswerteschaltung durch elektromagnetische Störungen zu vermeiden und um die Abstrahlung von elektromagnetischen Wellen zu verhindern. Alternativ zu den gezeigten Ausführungsbeispiel kann eine elektromagnetische Abschirmung durch eine Metallisierung eines Gehäuses aus Kunststoff oder durch einen Einsatz von metallfasergefülltem Kunststoff erreicht werden. Der dabei verwendete Werkstoff darf jedoch, um die Funktion des GMR-Sensors nicht zu beeinträchtigen, im Bereich des GMR-Sensors keine ferromagnetischen Eigenschaften besitzen.

Die Flachbaugruppe 56 kann zum verbesserten Schutz und zum Einsatz in explosionsgefährdeten Bereichen im Gehäuse 90 mit einem isolierenden Füllstoff vergossen werden.

Das vieradrige Kabel 55 zur Verbindung des Positionsgebers mit der Reglereinheit kann je nach Einsatzfall einfach oder doppelt geschirmt ausgeführt werden. Eine elektrische Verbindung der Kabelschirme mit der Flachbaugruppe 56 und/oder dem Metallschirm 60 ist in einfacher Weise möglich.

In den Figuren 11 bis 14 wird die räumliche Anordnung eines Magneten zum Gehäuse 90 deutlich. Zur Erfassung von Drehwinkeln befindet sich ein Magnet 94 etwa mittig unter einer im Wesentlichen halbkreisförmigen Ausnehmung 95 im Gehäuse 90. Die Ausnehmung 95 stellt eine Zentrierhilfe für die Einstellung der relativen Lage des Magneten 94 zum GMR-Sensor 50 dar, der sich im Gehäuse 90 befindet. Dazu kann in die Ausnehmung 95 ein formschlüssiges Positionierwerkzeug eingelegt werden, welches den Magneten 94 aufnimmt. Nach fester Montage des Magneten an einem in den Figuren 11 und 12 nicht weiter dargestellten Bewegungsteil ist der Magnet 94 zentriert und das Positionierwerkzeug kann entfernt werden. Die Drehachse des Magneten 94 verläuft in Figur 11 senkrecht zur Zeichnungsebene. Die Drehbarkeit des Magneten 94 ist durch einen Pfeil 96 angedeutet. In Figur 12 verläuft die Drehachse durch die Mitte des Magneten 94 in horizontaler Richtung. Die Figuren 13 und 14 zeigen die Anordnung eines Magneten 97 zur Erfassung von Linearbewegungen. Dies ist durch einen Verschiebepfeil 98 angedeutet. Der Magnet 97 befindet sich hier gemeinsam mit dem GMR-Sensor 50, der innerhalb des Gehäuses 90 angeordnet ist, im Wesentlichen in einer senkrecht zu der oben beschriebenen Drehachse verlaufenden Ebene, die parallel zur Zeichnungsebene der Figur 13 liegt. Wiederum kann durch ein Positionierwerkzeug, das formschlüssig zur Ausnehmung 95 sowie zum Magneten 97 ausgebildet ist, die exakte Positionierung des Magneten erleichtert werden. Durch die gewählte Anordnung des GMR-Sensors 50 in seinem Gehäuse 90 wird erreicht, dass derselbe GMR-Sensor sowohl zur Erfassung von Drehwinkeln als auch von Linearbewegungen ohne konstruktive Änderungen seines Gehäuses geeignet ist. Die Magneten 94 und 97 sind in einem in den Figuren nicht dargestellten Kunststoffteil gefasst und zum Schutz vor Umwelteinflüssen vergossen. Die Führung der Magneten 94 und 97 in einem in den Zeichnungen nicht dargestellten Bewegungsteil werden konstruktiv an die jeweiligen Einbaubedingungen angepasst, so dass die Dreh- oder Linearbewegung eines Stellglieds in eine dazu korrespondierende Dreh- oder Linearbewegung der Magneten 94 bzw. 97 umgesetzt wird.

**Patentansprüche**

1.    Stellungsregler, insbesondere für ein durch einen Antrieb (6) betätigbares Ventil (2),
      mit einem Positionsgeber (9) zur Erfassung der Ist-Position eines Stellglieds (7) und

mit einer Reglereinheit (13) zum Vergleich der Ist-Position mit einer vorgebbaren Soll-Position und zur Erzeugung eines Stellsignals,

**dadurch gekennzeichnet,**

**dass** als Positionsgeber (9) ein Permanentmagnet (18) und ein so genannter giant magnetoresistiver (GMR-) Sensor (50) vorgesehen sind, welche korrespondierend zu einer Bewegung des Stellglieds (7) relativ zueinander dreh- oder verschiebbar sind,

**dass** der GMR-Sensor (50) in einem Gehäuse (90) angeordnet ist, derart, dass derselbe Sensor (50) zur Detektion einer relativen Drehbewegung zumindest näherungsweise auf der Drehachse eines für diesen Fall vorgesehenen Magneten (94) positionierbar ist und dass der Sensor zur Detektion einer relativen Verschiebung gemeinsam mit einem für diesen.Fall vorgesehenen Magneten (97) in einer im Wesentlichen senkrecht zur oben erwähnten Drehachse verlaufenden Ebene positionierbar ist.

2. Stellungsregler nach Anspruch 1, **dadurch gekennzeichnet, dass** im Gehäuse des GMR-Sensors (50) eine Temperaturkompensationsschaltung angeordnet ist.

3. Stellungsregler nach Anspruch 2, **dadurch gekennzeichnet, dass** der Brückenwiderstand des GMR-Sensors (30) der Messwiderstand der Temperaturkompensationsschaltung ist.

4. Stellungsregler nach Anspruch 2 oder 3, **dadurch gekennzeichnet, dass** der GMR-Sensor (50) auf der Unterseite und die Temperaturkompensationsschaltung auf der Oberseite derselben Leiterplatte (52) angeordnet sind.

5. Stellungsregler nach einem der vorhergehenden Ansprüche, **dadurch gekennzeichnet, dass** am Gehäuse (90) des GMR-Sensors (50) eine Zentrierhilfe (95) für die Einstellung der relativen Lage des Magneten (94, 97) zum Sensor (50) bei der Montage vorgesehen ist.

6. Stellungsregler nach einem der vorhergehenden Ansprüche, **dadurch gekennzeichnet, dass** die Reglereinheit (13) in einem zweiten, vom Gehäuse (90) des GMR-Sensors (50) getrennten Gehäuse angeordnet ist.

## Claims

1. Position controller, in particular for a valve (2) which can be operated by a drive (6),
   having a position sensor (9) for detection of the actual position of an actuating element (7), and
   having a controller unit (13) for comparison of the actual position with a nominal position, which can be predetermined, and for production of an actuating signal,

   **characterized**

   **in that** a permanent magnet (18) and a so-called giant magnetoresistive (GMR) sensor (50) are provided as the position sensor (9) and can be rotated or moved relative to one another corresponding to any movement of the actuating element (7),

   **in that** the GMR sensor (50) is arranged in a housing (90) such that the same sensor (50) can be positioned at least approximately on the rotation axis of a magnet (94) that is provided for this situation in order to detect any relative rotary movement, and that the sensor can be positioned together with a magnet (97) that is provided for this situation in a plane running essentially at right angles to the rotation axis mentioned above in order to detect any relative linear movement.

2. Position controller according to Claim 1, **characterized in that** a temperature compensation circuit is arranged in the housing of the GMR sensor (50).

3. Position controller according to Claim 2, **characterized in that** the bridging resistor of the GMR sensor (30) is the measurement resistor of the temperature compensation circuit.

4. Position controller according to Claim 2 or 3, **characterized in that** the GMR sensor (50) is arranged on the lower face of the printed circuit board (52), and the temperature compensation circuit is arranged on the upper face of the same printed circuit board (52).

5. Position controller according to one of the preceding claims, **characterized in that** a centring aid (95) is provided on the housing (90) of the GMR sensor (50) for adjustment of the relative position of the magnets (94, 97) with respect to the sensor (50) during installation.

6. Position controller according to one of the preceding claims, **characterized in that** the controller unit (13) is arranged in a second housing, which is separated from the housing (90) of the GMR sensor (50).

**Revendications**

1. Positionneur, en particulier pour vanne (2) actionnable par un mécanisme d'entraînement 56), lequel positionneur comporte

   un transmetteur de position (9), destiné à détecter la position réelle d'un actionneur (7), et

   une unité de régulation (13), destinée à comparer la position réelle avec une position de consigne prédéterminée et à générer un signal de réglage,

   **caractérisé en ce que**

   il est prévu comme transmetteur de position (9) un aimant permanent (18) et un capteur dit magnétorésistif géant (GMR) (50) qui sont mobiles en rotation ou en translation l'un par rapport à l'autre en correspondance d'un déplacement de l'actionneur (7),

   le capteur GMR (50) est placé dans un boîtier (90) de sorte que le même capteur (50) peut être mis en position en vue de détecter un déplacement angulaire relatif au moins approximativement sur l'axe de rotation d'un aimant (94) prévu pour cela et que le capteur destiné à détecter un déplacement en translation relatif conjointement avec l'aimant (97) prévu pour cela peut être mis en position dans un plan qui s'étend sensiblement perpendiculairement à l'axe de rotation susmentionné.

2. Positionneur selon la revendication 1, **caractérisé en ce qu'**un circuit de compensation de la température est placée dans le boîtier du capteur GMR (50).

3. Positionneur selon la revendication 2, **caractérisé en ce que** la résistance de pont du capteur GMR (50) est la résistance de mesure du circuit de compensation de la température.

4. Positionneur selon la revendication 2 ou 3, **caractérisé en ce que** le capteur GMR (50) est placé sur la face inférieure et le circuit de compensation de la température est placé sur la face supérieure de la même carte à circuits imprimés (52).

5. Positionneur selon l'une des revendications précédentes, **caractérisé en ce qu'**il est prévu au niveau du boîtier (90) du capteur GMR (50) un auxiliaire de centrage (95) destiné à régler la position relative de l'aimant (94, 97) par rapport au capteur (50) lors du montage.

6. Positionneur selon l'une des revendications précédentes, **caractérisé en ce que** l'unité de régulation (13) peut être placée dans un deuxième boîtier séparé du boîtier (90) du capteur GMR (50).

FIG 1

FIG 2

20    ↓ dU    21    22

Vref=2,5V

R$_{komp}$

FIG 3

R4

R3    +

−

R5    R1    Ib    30    Ub    dU

GND

FIG 4

Uref=2,5V    Ucc=3V    Ucc=3V

R$_{off}$    dU    42

+    +

−    R$_{gain}$    −    41

R9    40    GND

GND

FIG 9

FIG 6

FIG 5

FIG 10

91

90

92

95

68  69

67

60

61

64  65  66

62

51

50

52

56

53

54

55

101

102

103

100

104

FIG 13

FIG 11

92

90

96

94

95

93

91

55

FIG 12

95

94

90

92

90

98

97

95

93

91

FIG 14

55

97

93

94

90

EP 1 269 054 B1

FIG 7

FIG 8